# EUROPÄISCHE PATENTSCHRIFT

(11) **EP 1 384 901 B1**
(45) Veröffentlichungstag und Bekanntmachung des Hinweises auf die Patenterteilung: **09.03.2016**
(21) Anmeldenummer: 03014013.1
(22) Anmeldetag: 21.06.2003
(51) Int. Cl.: F15B 3/00, F15B 19/00, F04B 23/06, F04B 41/06, G01M 3/28, G01N 3/12

(54) **Regelverfahren zum Druckaufbau mittels Druckübersetzern, insbesondere zum Prüfen der Druckfestigkeit von Rohren**
Control method for building up pressure by means of pressure intensifiers, especially for testing the compression strength of tubes
Procédé de régulation pour la mise en pression au moyen de multiplicateurs de pression, spécialement pour tester la compression de tubes

(30) Priorität: 23.07.2002 DE 10233358
(43) Veröffentlichungstag der Anmeldung: 28.01.2004
(73) Patentinhaber: SMS group GmbH, 40237 Düsseldorf (DE)
(72) Erfinder: Kolbe, Manfred, 41061 Mönchengladbach (DE); Schiffers, Hans-Günter, 41069 Mönchengladbach (DE); Feldmann, Uwe, 41569 Rommerskirchen (DE); Krutz, Wolfgang, 41069 Mönchengladbach (DE)
(74) Vertreter: Grosse, Wolf-Dietrich Rüdiger

(56) Entgegenhaltungen:
- FR-A- 2 689 571
- GB-A- 2 175 352
- SU-A- 717 595
- SU-A- 1 029 036
- US-A- 4 021 156
- US-A- 4 666 374

## Beschreibung

Die Erfindung betrifft ein Regelverfahren zum Druckaufbau mittels Druckübersetzern bei einer Presse zum Prüfen der Druckfestigkeit von Rohren mit den im Oberbegriff des unabhängigen Anspruchs angegebenen Merkmalen, wie durch die FR 2 689 571 A bekanntgeworden, bei der die Zylinder der Druckübersetzer bei streng gleichen Geschwindigkeiten funktionieren sollen. Eine Rohrprüfpresse ist beispielsweise aus der SU 717 595 A bekannt.

Um eine Flüssigkeit unter Druck zu setzen, sind beispielsweise handelsübliche Hochdruckplungerpumpen bekannt, von denen bei Rohrprüfpressen mehrere zum Einsatz kommen. Hier macht sich die Oszillation aufgrund der Anzahl der vorhandenen Kolben nachteilig bemerkbar, was sich aus den Prüfprotokollen ergibt, die zu jedem geprüften Rohr erstellt werden müssen. Eine Regelung auf einen bestimmten Prüfdruck erfordert zudem ein zusätzliches Regelventil, das sich nur auf der Hochdruckseite vorsehen läßt. Da es sich bei dem Druckmedium von Prüfpressen regelmäßig um Wasser, gegebenenfalls eine Wasseremulsion handelt, in dem sich häufig aus den zu prüfenden Rohren stammende Schadstoffe wie Sinter befinden, unterliegt das Regelventil einem hohen Verschleiß.

Im praktischen Betrieb werden daher an Prüfpressen einfache Druckübersetzer, bestehend aus in einem Zylinder angeordneten Plunger und diesen beaufschlagende Kolben-Zylinder-Einheit, eingesetzt. Als Vorteil eines solchen Druckübersetzers liegt vor, daß die Druckregelung auf der Ölseite und folglich mit geringem Verschleiß an den Regelventilen möglich ist. Außerdem entsteht keine Oszillation während des Druckaufbaus und des Druckhaltens. Als Nachteil hat sich aber herausgestellt, daß das Nutzvolumen auf der Wasserseite immer größer sein muß als das Kompressionsverhalten im Prüfling, d.h. im zu prüfenden Rohr. Wenn nun Prüflinge ein großes Kompressionsvolumen erfordern, wie im Falle von Großrohren, macht das den Einsatz von sehr großen und damit teuren Druckübersetzern notwendig. Eine aufwendige, teure Bauweise bringen auch bekannte, doppeltwirkende Druckübersetzer mit sich, bei denen außerdem durch die Umschaltung der Kolbenbewegung große Druckschwankungen im Druckmedium entstehen. Das Vorgenannte gilt nicht nur für Prüfpressen, sondern für jede andere Vorrichtung zum Druckaufbau, bei denen eine Flüssigkeit unter Druck gesetzt wird.

Bei einem aus der US 4.021.156 A bekannten Hochdruck-Hydrauliksystem wird davon ausgegangen, dass sich ein erster Druckübersetzer in einer aktiven Betriebsphase und ein zweiter Druckübersetzer in einer inaktiven Betriebsphase befindet. Wenn der Kolben des einen Druckübersetzers seinen Antriebshub beendet hat, wird dem Kolben des anderen Druckübersetzers eine zusätzliche Hydraulikflüssigkeitsmenge aufgeschaltet.

Das Aufschalten zusätzlicher Hydraulikflüssigkeiten, wenn der Kolben eines Druckübersetzers seine Endlage erreicht hat, auf den anderen Druckübersetzer wird weiterhin durch die GB 2 175 352 A vorgeschlagen.

Die US 4.666.374 A sieht vor, eine Flüssigkeitsmenge gezielt auf mehrere Hydraulikzylinder zu verteilen.

Der Erfindung liegt daher die Aufgabe zugrunde, ein Regelverfahren der eingangs genannten Art zu schaffen, mit dem sich die genannten Nachteile vermeiden lassen und das insbesondere einen einfachen, kostengünstigen Aufbau und höhere Standzeiten ermöglichen.

Diese Aufgabe wird erfindungsgemäß dadurch gelöst, dass kurz bevor ein Plunger einer Kolben-Zylinder-Einheit eines ersten Druckübersetzers seinen Arbeitshub beendet und sich seiner Endlage genähert hat, seine Geschwindigkeit reduziert und gleichzeitig damit ein Plunger einer Kolben-Zylinder-Einheit eines betriebsbereiten weiteren Druckübersetzers in Bewegung gesetzt wird, wobei zur Erfassung des Beginns des Verzögerns bzw. Beschleunigens der Druckübersetzer die Wegmesseinrichtungen die jeweilige Position der Plunger ermitteln und in die Regeleinheit eingeben.

Das läßt sich vorteilhaft mehrfach wiederholt durchführen. Indem somit einerseits die Geschwindigkeit reduziert und davon abhängig gleichzeitig ein nachfolgend beaufschlagter Druckübersetzer beschleunigt wird, wird ein kontinuierlicher Druckaufbau ohne einen Druckeinbruch erreicht und damit ein Überschwingen beim Komprimieren verhindert. Denn das Abbremsen und Beschleunigen wird synchronisiert. Die Summe der von den beiden Druckübersetzern geförderten Druckflüssigkeit bleibt stets konstant bzw. kann einen beabsichtigten zeitlichen Verlauf einnehmen.

Es lassen sich damit trotz der Verwendung kleiner, kostengünstiger handelsüblicher und baugleicher Druckübersetzer auch die für Rohrprüfpressen bei Großrohren benötigten erheblichen Kompressionsvolumina erreichen. Somit sind groß bauende, in Sonderanfertigung herzustellende und damit teure Einzeldruckübersetzer entbehrlich.

Das einzubringende Füll- und Kompressionsvolumen unterliegt gleichwohl keiner Begrenzung, da mehrere der einfachen, kleinen Druckübersetzer alternierend und gegebenenfalls von neuem, d.h. jeweils mit dem ersten Druckübersetzer beginnend in der erfindungsgemäßen Weise mehrfach wiederholt betätigt werden können, bis das gewünschte, große Volumen und der Prüfdruck gegeben ist. Dies läßt sich vorteilhaft dadurch feststellen, daß an die Regeleinheit ein Drucksensor zur Aufnahme des Rohrinnendrucks angeschlossen wird. Hiervon abhängig lassen sich dann auch die Druckübersetzer ansteuern. Schließlich werden höhere Standzeiten der Komponenten, insbesondere der Regelventile erreicht, weil diese nicht auf der Wasserseite, sondern auf der Ölseite angeordnet sind. Weiterhin ist es auch möglich, zum Dekomprimieren das Rohr mittels der Druckübersetzer zu leeren, d.h. das Druckmittel raus zu fördern.

Weitere Merkmale und Einzelheiten der Erfindung ergeben sich aus den Ansprüchen und der nachfolgenden Beschreibung anhand eines in den Zeichnungen schematisch dargestellten Ausführungsbeispiels der Erfindung. Es zeigen:
- Fig. 1: einen Systemaufbau mit Hydraulikplan zum Druckaufbau mittels Druckübersetzern; und
- Fig. 2: ein Fördernstrom-/Zeit-Diagramm.

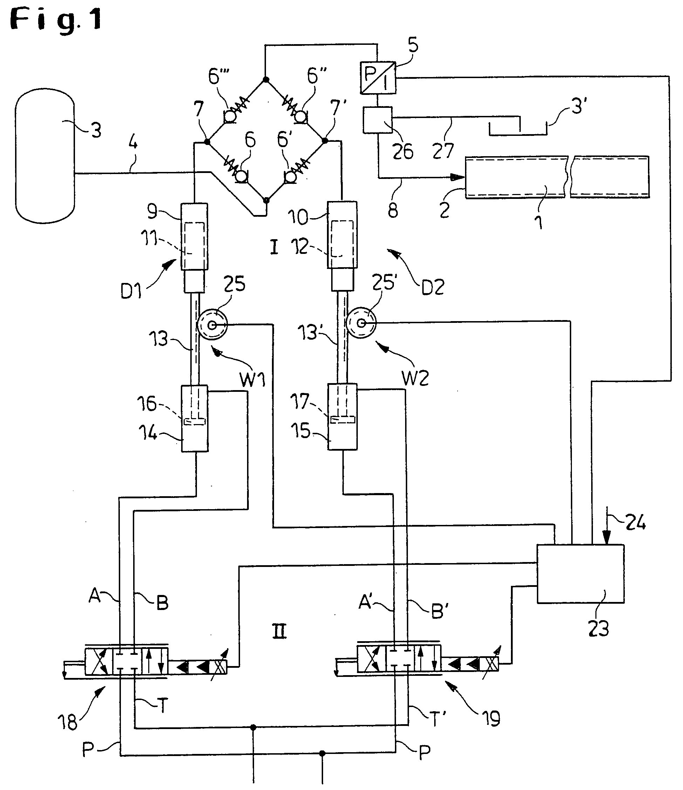

Die Figur 1 zeigt ein zu prüfendes Rohr 1, dessen Enden durch aufgesetzte Kappen 2 der dergleichen abgeschlossen sind. Über eine Medienversorgung (Druckflüssigkeit) 3, z.B. ein Füllbehälter, ein Becken oder eine Kreiselpumpe, einen Tank 3', eine Leitung 27, ein Ventil 26 und eine Druckleitung 8 kann das Rohr 1 so lange mit einem Druckmedium, z.B. eine Wasser-Öl-Emulsion, gefüllt werden, bis sämtliche Luft aus dem Rohr 1 entwichen ist und im Rohrinneren der gewünschte Prüfdruck herrscht. Alternativ kann im direkten Weg zunächst das Rohr 1 gefüllt und erst danach der Druckaufbau vorgenommen werden.

Um dies zu ermöglichen, sind im Ausführungsführungsbeispiel nach Figur 1 auf der Hochdruck- bzw. Wasserseite I zwei positions- bzw. wegabhängig nacheinander und bis zum Erreichen des hohen Füll- und Kompressionsvolumens gegebenenfalls wiederholt, alternierend beaufschlagbare Druckübersetzer D1 und D2 - ausgeführt als Kolben-Zylindereinheiten 14, 16 bzw. 15, 17 und mit diesen zusammenarbeitenden, in Zylindern 9, 10 angeordneten Plungern 11, 12 - im Einsatz. Die Zylinder 9, 10 besitzen Anschlüsse 7, 7', die einerseits mit Rückschlagventilen 6", 6'" und andererseits mit Rückschlagventilen 6 und 6' in Verbindung stehen. Von den zweiten Anschlüssen der Rückschlagventile 6, 6' führt eine Leitung 4 zu der Medienversorgung 3.

Zum Druckaufbau im Rohr 1 wird beispielsweise zunächst der Druckübersetzer D1 beaufschlagt. In den Arbeitsraum des Zylinders 9 ist über das Rückschlagventil 6 und die Leitung 4 von der Medienversorgung 3 das Druckmittel gefördert worden. Beginnt der Plunger 11 mit seinem Arbeitshub, so sperrt das Rückschlagventil 6 während das Rückschlagventil 6'" öffnet, so daß das Druckmittel über die Druckleitung 8 in das Rohr 1 gelangt. Kurz bevor der Plunger 11 seinen Arbeitshub beendet und sich seiner Endlage genähert hat, wird der Plunger 12 des betriebsbereiten weiteren Druckübersetzers D2 zeitlich in Bewegung gesetzt, der in der Folge die Befüllung bzw. den Druckaufbau des Rohrs 1 fortführt. Dieses Wechselspiel kann bis zum Erreichen des endgültigen Kompressionsvolumens durchgeführt werden, wobei der jeweils nicht aktivierte Druckübersetzer nach dem Arbeitshub mit dem für den Folgehub benötigten Druckmittel aus der Medienversorgung 3 versorgt wird.

Als Antrieb für die Plunger 11, 12 der Druckübersetzer D1, D2 dienen die Kolben-Zylindereinheiten 14, 16 bzw. 15, 17, die über Kolbenstangen 13, 13' auf die Plunger 11, 12 arbeiten. Bei den Kolben-Zylindereinheiten 14, 16 und 15, 17 handelt es sich um doppelt wirkende Zylinder, die mit einem Hydrauliköl angetrieben werden. Die Steuerung der Kolben-Zylindereinheiten erfolgt über auf der Ölseite II angeordnete Regelventile 18, 19, die an eine übliche Ölversorgung angeschlossen sind.

Die Regelventile 18, 19 werden von einer Regeleinheit 23 angesteuert, über die die beiden Druckübersetzer D1, D2 zu einem Betriebssystem mit der oben beschriebenen Arbeitsweise der Kolben bzw. Plunger 11, 12 zusammengeschlossen sind. Zur Erfassung des Beginns des Verzögerns bzw. Beschleunigens des Druckübersetzers D1 bzw. D2 sind ebenfalls mit der Regeleinheit 23 verbundene Wegmeßeinrichtungen W1 und W2 vorgesehen, im Ausführungsbeispiel ausgebildet als Ritzel 25, 25', die mit Zahnstangenabschnitten der Kolbenstangen 13, 13' kämmen und so die jeweilige Position der Plunger 11 und 12 ermitteln. Zusätzlich kann die Regeleinheit 23 noch Signale von einem Druckaufnehmer 5 verarbeiten, welcher den Druck im Rohr 1 über die Druckleitung 8 ermittelt. Über einen Anschluß 24 lassen sich Sollwerte für die Regeleinheit 23 eingeben.

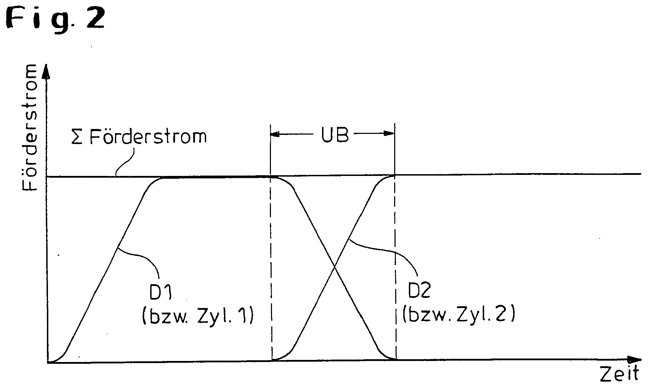

Es wird somit erreicht, daß auch für Prüfpressen von Großrohren bei den dort benötigten großen Füll- und Kompressionsvolumina mit handelsüblichen, kleinen Druckübersetzern gearbeitet werden kann, indem diese zu einem Betriebssystem zusammengeschlossen sind und gezielt alternierend zum Einsatz gebracht werden. Dies geschieht aufgrund des Anfahrens des jeweils folgenden Druckübersetzers zeitgleich und wegabhängig erst bei der Endlagen-Annäherung des jeweils vorhergehend beaufschlagten Druckübersetzers ohne nachteilige Druckschwankungen, d.h. eine Oszillation tritt nicht auf. Wie der Figur 2 zu entnehmen ist, bleibt die Summe der von beiden Druckübersetzern D1 und D2 geförderten Druckfüssigkeit konstant, ohne daß es im Übergangsbereich UB zu einem Druckeinbruch kommt. Anstelle von lediglich zwei wechselweise betriebenen, baugleichen kleinen Druckübersetzern können auch noch weitere eingesetzt werden.

### Bezugszeichenliste

- 1: Rohr
- 2: Kappe
- 3: Füllbehälter
- 3': Tank
- 4: Leitung
- 5: Druckaufnehmer
- 6: Rückschlagventil
- 7: Anschluß
- 8: Druckleitung
- 9: Zylinder
- 10: Zylinder
- 11: Plunger
- 12: Plungen
- 13: Kolbenstange
- 14: Zylinder
- 15: Zylinder
- 16: Kolben
- 17: Kolben
- 18: Regelventil
- 19: Regelventil
- 23: Regleinheit
- 24: Anschluß
- 25: Ritzel
- 26: Ventil
- 27: Leitung
- D1: Druckübersetzer
- D2: Druckübersetzer
- I: Wasser-(Hochdruck-)Seite
- II: Ölseite
- W1: Wegemeßeinrichtung
- W2: Wegemeßeinrichtung
- UB: Übergangsbereich

## Patentansprüche

1. Regelverfahren zum Druckaufbau mittels Druckübersetzern bei einer Presse zum Prüfen der Druckfestigkeit von Rohren (1) durch Befüllen mit einer Flüssigkeit ihres nach Abschließen der Rohrenden gegebenen Innenraums und anschließendes Beaufschlagen der Flüssigkeit durch mit vorgebbarem Druck eingepreßte weitere Flüssigkeit, wobei das Rohr (1) über mindestens zwei mit Drucköl beaufschlagte Druckübersetzer (D1, D2) gefüllt wird, die auf ihrer Hochdruckseite (1) über Leitungen mit daran angeordneten Rückschlagventilen (6, 6') mit einer Medienversorgung (3) und über in den Leitungen angeordnete weitere Rückschlagventile (6", 6"') mit dem Rohrinnenraum verbunden werden, wobei die Druckübersetzer (D1, D2) mit ihnen vorgeschalteten Wegmesseinrichtungen (W1, W2) und Regelventilen (18, 19) über eine gemeinsame Regeleinheit (23) zu einem Betriebssystem zusammengeschlossen werden,
**dadurch gekennzeichnet,**
**dass** kurz bevor ein Plunger (11) einer Kolben-Zylinder-Einheit (14, 16) eines ersten Druckübersetzers (D1) seinen Arbeitshub beendet und sich seiner Endlage genähert hat, seine Geschwindigkeit reduziert und gleichzeitig damit ein Plunger (12) einer Kolben-Zylinder-Einheit (15, 17) eines betriebsbereiten weiteren Druckübersetzers (D2) in Bewegung gesetzt wird, wobei zur Erfassung des Beginns des Verzögerns bzw. Beschleunigens der Druckübersetzer (D1, D2) die Wegmesseinrichtungen (W1, W2) die jeweilige Position der Plunger (11, 12) ermitteln und in die Regeleinheit (23) eingeben.

2. Regelverfahren nach Anspruch 1,
**dadurch gekennzeichnet,**
**dass** das positions- bzw. wegabhängige Reduzieren der Geschwindigkeit eines vorhergehenden Druckübersetzers (D1 oder D2) und das Beschleunigen des bzw. der nächstfolgenden Druckübersetzer mehrfach wiederholt durchgeführt wird.

## Claims

1. A control method for building up pressure by means of pressure intensifiers in a press for testing the pressure resistance of pipes (1) by filling their given interior upon sealing the pipe ends with a fluid and subsequently acting upon the fluid with additional fluid introduced with pre-definable pressure, wherein the pipe (1) is filled by means of at least two pressure intensifiers (D1, D2) that are acted upon with hydraulic oil and on their high-pressure side (1) connected to a medium supply (3) via lines with check valves (6, 6') arranged thereon, as well as connected to the pipe interior via additional check valves (6'', 61''') arranged in the lines, and wherein the pressure intensifiers (D1, D2) are interconnected with position measuring devices (W1, W2) and control valves (18, 19) arranged upstream thereof by means of a common control unit (23) so as to form an operating system,
**characterized in that**
a plunger (11) of a piston-cylinder unit (14, 16) of a first pressure intensifier (D1) reduces its speed shortly before it has completed its working stroke and approached its end position and a plunger (12) of a piston-cylinder unit (15, 17) of an another operational pressure intensifier (D2) is simultaneously set in motion, wherein the position measuring devices (W1, W2) determine the respective position of the plungers (11, 12) and input this position into the control unit (23) in order to detect the beginning of the respective deceleration or acceleration of the pressure intensifiers (D1, D2).

2. The control method according to claim 1,
**characterized in that**
the position-dependent or path-dependent reduction of the speed of the upstream pressure intensifier (D1 or D2) and the acceleration of the downstream pressure intensifier or pressure intensifiers is repeated several times.

## Revendications

1. Procédé de réglage pour la montée en pression au moyen de démultiplicateurs de pression dans une presse, pour tester la résistance à la pression de tubes (1) par le remplissage avec un liquide de leur espace intérieur fourni après fermeture des extrémités des tubes, puis alimentation du liquide par un autre liquide comprimé avec une pression pouvant être prédéterminée, sachant que le tube (1) est rempli par au moins deux démultiplicateurs de pression (D1, D2) alimentés en huile comprimée, qui sont reliés sur leur côté haute pression (1) à une alimentation en fluide (3) par des lignes avec des clapets anti-retour (6, 6') disposés dessus et sont reliés à l'espace intérieur des tubes par d'autres clapets anti-retour (6'', 6''') disposés dans les lignes, sachant que les démultiplicateurs de pression (D1, D2) sont fermés ensemble en un système d'exploitation avec des dispositifs de mesure de déplacement (W1, W2) et des soupapes de réglage (18, 19) en amont de ceux-ci par le biais d'une unité de réglage (23) commune,
**caractérisé en ce que**
peu avant, un plongeur (11) d'une unité de piston-cylindre (14, 16) d'un premier démultiplicateur de pression (D1) termine sa course et s'est approché de sa position de fin de course, réduit sa vitesse et parallèlement à cela, un plongeur (12) d'une unité de piston-cylindre (15, 17) d'un autre démultiplicateur de pression (D2) prêt à fonctionner est mis en mouvement, sachant que pour détecter le début du ralentissement, respectivement, de l'accélération du démultiplicateur de pression (D1, D2), les dispositifs de mesure de déplacement (W1, W2) calculent la position respective du plongeur (11, 12) et l'entrent dans l'unité de réglage (23).

2. Procédé de réglage selon la revendication 1,
**caractérisé en ce que**
la réduction de la vitesse en fonction de la position, respectivement du trajet, d'un démultiplicateur de pression (D1 ou D2) précédent, et l'accélération du, respectivement, des démultiplicateur(s) de pression suivant(s), sont effectuées en étant répétées plusieurs fois.
